# EUROPEAN PATENT APPLICATION

(11) **EP 1 434 428 A2**
(43) Date of publication of application: **30.06.2004**
(21) Application number: 03029197.5
(22) Date of filing: 18.12.2003
(51) Int. Cl.: H04N 5/40

(54) **RF output channel setting device**

(30) Priority: 25.12.2002 JP 2002373417
(71) Applicant: Orion Electric Company, Ltd., Takefu-shi, Fukui-ken (JP)
(72) Inventor: Kakiuchi, Atsushi, Takefu-shi Fukui-ken (JP); Shimazaki, Takashi, Takefu-shi Fukui-ken (JP)
(74) Representative: Kirschner, Klaus Dieter, Dipl.-Phys.

(57) **Abstract**

This invention enables setting an RF output channel to a desired channel with a simple operation. A number key on a remote controller is depressed for long time of three seconds or more as an operation other than an ordinary operation for the number key. If a control portion detects a setting signal generated by thus depressing the number key for the long time, the control portion determines whether a channel corresponding to the operated number key is vacant. If the channel is vacant, the control portion sets the channel as the RF output channel. If the channel corresponding to the depressed number key is not vacant, a vacant channel is searched. If there is a vacant channel, the vacant channel is set as the RF output channel. If the control portion receives a signal transmitted from the remote controller and determines that the signal is the setting signal generated by depressing the number key for the long time while a video equipment is turned off, the control portion turns on the video equipment and turn the video equipment into a state in which the RF output channel can be set. If the setting of the RF output channel is over, the control portion turns off the video equipment.

## Description

The present invention relates to an RF output channel setting device for setting an RF output channel of an RF converter in a video equipment.

A video equipment includes an RF (Radio Frequency) converter which converts a video signal and a voice signal to a television signal and which outputs the television signal to an external display such as a TV receiver and a monitor. An output channel of the RF converter is set to a vacant channel which delivers no broadcast. The output channel is set to, for example, either channel 1 or channel 2 or either channel 3 or channel 4.

To set this RF output channel, a channel changeover switch provided on a rear surface of the video equipment is operated. With this method, an erroneous channel is sometimes set by a user's erroneous operation. Besides, since the channel changeover switch is located at a position at which a user finds it difficult to operate the switch, user's burden increases disadvantageously when the channel is corrected.

To enable setting the RF output channel more easily, Japanese Utility Model Application No. 3088158 (paragraph 0010) proposes changing over channels prepared in advance and setting the changed-over channel when the user depresses two specific operation keys provided on the video equipment simultaneously. Japanese Patent Application Laid-Open No. 11-69243 (paragraph 0005) proposes detecting a vacant channel based on a channel plan corresponding to a regional code and setting the RF output channel to the vacant channel. Japanese Patent Application Laid-Open No. 6-133231 (paragraphs 0014 and 0019) proposes setting a mode of the video equipment at an RF output changeover mode by an existing tact switch or remote controller provided in a front portion of the video equipment, changing over the RF output channel, and writing the set channel to an EEPROM.

If the RF output channel is to be set using the two operation keys and the user forgets depressing the specific operation keys, the RF output channel cannot be set. In addition, if the user depresses the keys off depression timing, the RF output channel cannot be set, which disadvantageously makes it difficult for the user to operate the keys. If the vacant channel is detected and set as the RF output channel, the user can set the RF output channel only during channel presetting. Due to this, if it is necessary to utilize the RF output channel halfway because of changing one TV set to another, the user is required to preset the channel again, which disadvantageously causes the user inconvenience. If the RF output channel is set by the tact switch or the remote controller, the RF output channel cannot be set until the mode of the video equipment is set at the RF output changeover mode, which disadvantageously requires lots of time.

The present invention has been achieved in light of these conventional disadvantages. It is, therefore, an object of the present invention to provide an RF output channel setting device capable of setting an RF output channel with a simple operation.

According to one aspect of the present invention, there is provided an RF output channel setting device using operation keys for a video equipment that includes an RF converter, the RF output channel setting device comprises input means for accepting a setting signal generated by an operation other than an ordinary operation for one of the operation keys; and setting means for setting a channel allocated to the one operation key as an RF output channel based on the setting signal.

The operation other than the ordinary operation for the operation key means the operation of the operation key continuously for predetermined time or more. If such an operation is performed, the setting signal for setting the RF output channel is generated. Generally, the signal generated by such an operation causes a malfunction and the signal is not, therefore, accepted. However, by allowing the setting signal to be accepted by software, the existing operation key can be imparted a plurality of functions. In this way, the signal generated by the operation other than the ordinary operation for the specific operation key is used as the setting signal. If the input means recognizes the setting signal, a channel determined by the operation key is set as the RF output channel by a setting means. Alternatively, one of channels allocated in advance for the RF output channel setting is selected based on the setting signal and set as the RF output channel.

It is preferable to employ one of number keys for selecting one channel as the specific operation key. Since the channel designated by the number key can be directly set as the RF output channel, the user finds the setting very easy.

The RF output channel setting device comprises activation means for turning on the video equipment when the setting signal is received while the video equipment is turned off; and deactivation means for turning off the video equipment after the RF output channel is set. Generally, even if the video equipment is turned off, the signal from a specific operation key such as a power key can be received. Due to this, the setting signal is set to be able to be received even when the video equipment is turned off. By doing so, the RF output channel can be set at any time irrespective of whether the video equipment is turned on or off. Since the video equipment is turned off when the setting of the RF output channel is over, power consumption does not increase by the operation.

Further, the RF output channel setting device comprises search means for searching a vacant channel if the channel to be set is an already used channel, and the setting means sets the vacant channel detected by the search means as the RF output channel. Therefore, if the channel to be set is already used, the other channel is set as the RF output channel. It is thereby possible to always set the RF output channel. Accordingly, it is possible to output a video image from the video equipment without invalidating the setting operation.

Embodiments of the invention are now described with reference to the drawings in which:
Fig. 1 is a schematic block diagram of a video equipment in one embodiment of the present invention; and
Fig. 2 is a flow chart for setting an RF output channel.

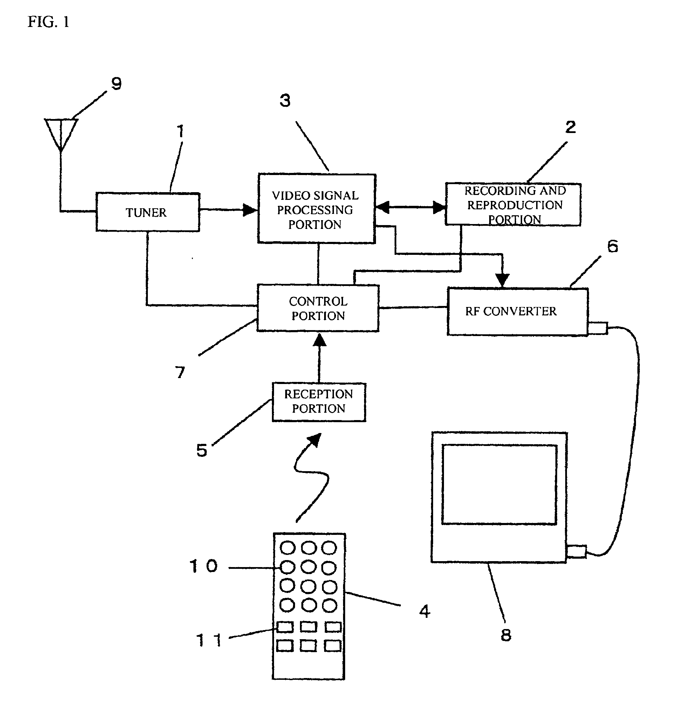

Fig. 1 illustrates a video equipment in one embodiment according to the present invention. This video equipment includes a tuner 1, a recording and reproduction portion 2 which records a received program video signal on a recording medium such as a hard disk, a DVD or a video tape and which reproduces the video signal from the recording medium, a video signal processing portion 3 such as a Y/C IC which processes the video signal, a remote controller 4 which makes various settings, channel selection, and the like, a reception portion 5 which receives a signal transmitted from the remote controller 4, an RF converter 6, and a control portion 7 which drives and controls the other constituent elements of the video equipment. An output terminal of the RF converter 6 is connected to an antenna input terminal of an external display device 8 such as a television set or a monitor through a cable. It is noted that the video signal mentioned herein includes a voice signal.

If a channel is selected by the remote controller 4, the tuner 1 receives a signal from a terrestrial broadcast or a satellite broadcast on the selected channel through an antenna 9 or receives a signal from a cable network. The received video signal is output from the video signal processing portion 3 to the external display device 8 through the RF converter 6. If a program is recorded, the received video signal is output to the recording and reproduction portion 2 through the video signal processing portion 3 and recorded on the recording medium. If the program is reproduced, the read video signal is output from the video signal processing portion 3 to the RF converter 6. The RF converter 6 converts the video signal to a television signal having a frequency according to an RF output channel. This television signal is output to the external display device 8. As a result, the user can view and listen to the received or recorded program on a screen of the external display device 8 or through a loudspeaker thereof.

The RF output channel is set when the video equipment is connected to the external display device 8. The control portion 7, which consists of a microcomputer including a CPU, an ROM, and an RAM, includes an input means for accepting a setting signal generated when an arbitrary number key 10 is operated differently from an ordinary operation therefor and a setting means for setting a channel allocated to the operated number key 10 as the RF output channel based on the setting signal. The control portion 7 also includes activation means for turning on the video equipment when the control portion 7 receives the setting signal while the video equipment is turned off and deactivation means for turning off the video equipment after the RF output channel is set. Namely, the control portion 7 functions as an RF output channel setting device which sets the RF output channel using one of the number keys 10 on the remote controller 4. It is noted that the RF output channel is not limited to channel 1 or channel 2 but may be set to a user's desired channel.

The remote controller 4 includes operation keys such as number keys 10 and action keys 11 and transmits a signal generated by operating one of the operation keys. The signal transmitted from the remote controller 4 is input to the control portion 7 through the reception portion 5. The input means receives a signal generated by an ordinary operation for one of the operation keys, i.e., by an operation of depressing the one operation key only once for a short time. If receiving this signal, the control portion 7 drives and controls the respective portions so as to execute a function set to the depressed operation key.

The input means also accepts a signal generated by an operation other than the ordinary operation for one of the numner keys 10. If receiving a signal generated by an operation other than the ordinary operation for one of the operation keys other than the number keys 10, the input means regards this received signal as an invalid signal and does not accept the signal. The operation for one of the number keys 10 other than the ordinary operation therefor means the depression of the one number key 10 for long time. The signal generated by the depression of the one number key 10 for a long time is determined as a setting signal.

The signal transmitted from the remote controller 4 consists of a reader code that is a start code for starting transmission, a custom code for identifying a manufacturer or a machine type of the video equipment, and a data code for indicating the function of the operated operation key. If the user depresses one operation key once, the respective codes are transmitted within a predetermined time, e.g., 108 milliseconds. If the user depresses the operation key for long time, the same code is continuously transmitted. The input means determines that the operation key is depressed for long time if detecting the same code within a certain time, e.g., 120 ± 5 milliseconds after the input of the first reader code. The input means determines that the operation key is operated only once if not detecting the next reader code for the certain time or more. Accordingly, the depression of the operation key for long time is an operation for continuously depressing the operation key at least for the certain time or more and this operation generates the setting signal.

In case where the user erroneously depresses one of the number keys 10 for long time, the setting signal should not be generated by this erroneous operation. Therefore, the input means sets specified time longer than the certain time and determines whether the setting signal can be generated by the depression of the number key 10 based on this specified time. If the specified time is, for example, three seconds and the codes are transmitted continuously for three seconds or more, the input means accepts the signal as the setting signal. If the codes are transmitted only for shorter time than the specified time, the input means does not regards the signal as the setting signal but determines the signal as the signal generated by the ordinary operation or as the invalid signal. Since there is a probability that an object is put on the remote controller 4 and the number key 10 is continuously depressed by the object, it is preferable to appropriately set an upper limit of the specified time. The input means does not accept the signal transmitted for long time by depressing one of the number keys 10 for longer time than the upper limit, as the setting signal. Therefore, even if the signal generated by unintended depression of the one number key 10 for long time is transmitted for long time, the input means does not accept the signal as the setting signal and it is thereby possible to prevent a malfunction of the video equipment.

If receiving the signal generated by the depression of one of the number keys 10 for long time, the setting means recognizes this signal as the setting signal for setting the RF output channel. The setting means determines whether a channel coincident with a number designated by the depressed number key 10 is used. If determining that the channel is vacant, i.e., the channel is a vacant station, the setting means sets the designated channel as the RF output channel. The RF output channel thus set is stored in a nonvolatile memory such as an EEPROM. In preparation for a case where the designated channel is used, i.e., the designated channel is an occupied station, the control means 7 is provided with a search means for searching a vacant channel. The search means searches the vacant channel from all channels. If there is a vacant channel, the setting means sets the vacant channel as the RF output channel. If there are two channels allocated as the RF output channel, the search means may narrow down search targets to the two channels and detect which channel is vacant.

The activation means turns on the video equipment when the input means of the control portion 7 receives the setting signal. The video equipment is supplied with a commercial power through a power supply plug. Therefore, even if the video equipment is turned off, the control portion 7 and the reception portion 5 are operable and the input means can, therefore, receive the signal from the remote controller 4. In a standby state, the input means accepts the signal generated when operating a power key to thereby turn on the video equipment. Further, the input means is set to accept the setting signal generated by depressing one of the number keys 10 for long time. The deactivation means turns off the video equipment after the RF output channel has been set and turns the video equipment into a standby state.

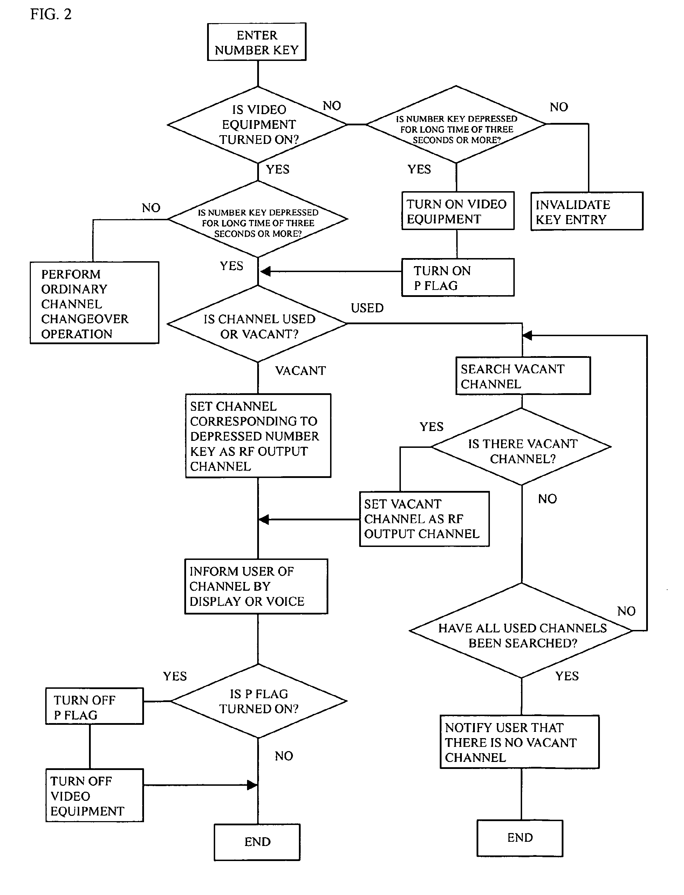

Steps of procedures for setting the RF output channel will next be described with reference to Fig. 2. First, the user depresses one of the number keys 10 corresponding to a channel desired to be set as the RF output channel. The signal is transmitted from the remote controller 4 and the signal received by the reception portion 5 is input to the control portion 7. If the video equipment is turned on, the input means of the control portion 7 detects the codes of the received signal. If detecting the same code within the certain time, the input means determines that the codes are transmitted continuously and regards this signal as the signal generated by depressing the one number key 10 for long time. If detecting the codes continuously for the specified time of three seconds or more, the input means determines this signal as the setting signal and accepts the signal. If detecting the codes for less than three seconds, the control portion 7 determines this signal as the signal generated by the ordinary operation for the number key 10 and performs an operation of changing to the channel coincident with the number of the depressed number key 10.

If the signal is transmitted from the remote controller 4 while the video equipment is turned off, the control portion 7 which inputs this signal from the reception portion 5 determines whether the codes are detected continuously for the specified time of three seconds or more. If detecting the codes continuously for less than three seconds, the control portion 7 determines that the input signal is invalid and performs no operation. If detecting the codes continuously for three seconds or more, then the control portion 7 determines that the input signal is the setting signal, turns on the video equipment, and turns on a power flag.

If the setting signal is input, the setting means determines whether the designated channel is vacant or used. If the designated channel is vacant, the setting means sets the channel coincident with the operated number key 10 as the RF output channel. If the designated channel is not vacant, the search means searches a vacant channel. If the vacant channel is found, the channel thus found is set as the RF output channel. If a plurality of vacant channels are present, the user can select one channel that the user likes and the setting means sets the channel selected by the user as the RF output channel.

If the RF output channel is set, the channel set as the RF output channel is displayed on a screen of the external display device 8 or a display portion provided on the video equipment to thereby notify the user of the channel. Alternatively, the channel is output by a voice to thereby notify the user of the channel.

If the designated channel is not a vacant channel, the search means searches all the channels. If the search means cannot find any vacant channel, the user is notified by the display or the voice that there is no vacant channel and that the RF output channel cannot be set.

After the notification, the control portion 7 determines whether the power flag is turned on. If the power flag is not turned on, the control portion 7 finishes the RF output channel setting operation and returns to an ordinary operation. If the power flag is turned on, then the control portion 7 turns off the power flag, turns off the video equipment and finishes the RF output channel setting operation.

As can be seen, the user can easily set the RF output channel only by performing the operation other than the ordinary operation for the operation key. Besides, since it suffices that the user depresses the number key corresponding to the desired channel, the user can set the RF output channel without the need of reading a manual and the operativity of the video equipment can be thereby enhanced.

Needless to say, the present invention is not limited to the embodiment stated above and various changes and modifications can be made to the embodiment within the scope of the present invention. Examples of the video equipment include a game machine and a video camera and the RF output channel setting device may be provided in such a game machine or a video camera. Further, the operation keys on an operation panel provided in a main body of the video equipment may be used as well as the remote controller. If the video equipment is connected to a network, then a personal computer, a mobile information terminal or the like connected to this network can be used to function as the operation key.

The RF output channel can be set using not only the number keys but also specific operation keys. As the specific operation keys, a pair of operation keys are preferably used. For example, a pair of a fast-forward key and a rewind key are preferably used. If the user depresses one of the fast-forward and rewind keys for long time, the channel allocated to this depressed key is set as the RF output channel. The use of the specific operation keys are appropriate if the RF output channel is selected from two channels of channel 1 and channel 2. Alternatively, the number of specific operation keys may be limited to one. By depressing this one operation key for long time, the channels are changed over according to operation time. When the user can find a desired channel by the operation key, the operation is stopped and the desired channel is set as the RF output channel. Further, one of the number keys may be continuously depressed by specified times or more as an operation other than the ordinary operation for the number key.

As is evident from the above description, according to the present invention, the RF output channel can be easily set by operating one of the operation keys. Due to this, it is unnecessary to provide a setting dedicated switch or force the user to perform a complicated operation and it is thereby possible to provide a user-friendly device. In addition, if the specific operation keys are designated to the number keys, the operated channel is directly set as the RF output channel. Therefore, it is easy for the user to know which channel is set as the RF output channel.

## Claims

1. An RF output channel setting device using number keys for a video equipment that includes an RF converter, the RF output channel setting device comprises:
input means for accepting a setting signal generated by an operation other than an ordinary operation for one of said number keys; and
setting means for setting a channel allocated to said one number key as an RF output channel based on said setting signal.

2. The RF output channel setting device according to claim 1, wherein
if the one number key is operated continuously for a predetermined time or more, the setting signal is generated.

3. An RF output channel setting device using operation keys for a video equipment that includes an RF converter, the RF output channel setting device comprises:
input means for accepting a setting signal generated by an operation other than an ordinary operation for a specific operation key among the operation keys; and
setting means for selecting a channel based on said setting signal, and for setting an RF output channel.

4. The RF output channel setting device according to claim 1 or 3, comprising:
activation means for turning on the video equipment when the setting signal is received while the video equipment is turned off; and
deactivation means for turning off the video equipment after the RF output channel is set.

5. The RF output channel setting device according to claim 1 or 3, comprising:
search means for searching a vacant channel if the set channel is an already used channel, and wherein
the setting means sets the vacant channel detected by the search means as the RF output channel.

6. A video equipment comprising:
an RF converter; and
a controller which drives said RF converter according to a channel selected by a number key, wherein
the controller comprises:
input means for accepting a setting signal generated by an operation other than an ordinary operation for said number key; and
setting means for setting a channel allocated to said number key as an RF output channel based on said setting signal.
